# EUROPEAN PATENT SPECIFICATION

(11) **EP 2 921 751 B1**
(45) Date of publication and mention of the grant of the patent: **04.07.2018**
(21) Application number: 15159637.6
(22) Date of filing: 18.03.2015
(51) Int. Cl.: F16K 5/06

(54) **BALL VALVE**
KUGELVENTIL
SOUPAPE À BILLE

(30) Priority: 18.03.2014 IT VR20140064
(43) Date of publication of application: 23.09.2015
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(56) References cited:
- EP-A1- 0 504 809
- FR-A- 317 747
- FR-A- 1 580 524
- US-A- 2 405 476
- US-A- 3 056 577
- US-A- 3 112 758
- US-A- 6 050 545

## Description

The present invention relates to a ball valve for controlling the flow of fluids in ducts.

Ball valves are known which comprise a valve body in which a spherical element for controlling the flow of fluid can rotate when actuated manually or by means of motorized actuators.

Such ball valves have a substantially hollow valve body to which two open tubular ends are integral for connection to the respective duct to be controlled.

The ball valve accommodates the spherical element, typically made of metal, which has a usually axial flow passage.

The spherical element can move rotatably between a flow-allowing position and a flow control position.

In an upward region, the hollow valve body has an access mouth, with a substantially circular cross-section, which can be crossed by a stem.

The stem is adapted to be jointly connected to the spherical element, providing usually a square hole defined on the spherical element and adapted to receive, with forced coupling by interference, the lower portion of the stem, which also is substantially square.

A valve of the above described type is also known from EP0504809B1 by Teco Sri in which the spherical element has, integrally therewith, a retention or stroke limiting tab that cooperates with abutment means defined within the hollow body in a manner adapted to define, when the spherical element is rotated, a stroke limiting position for allowing flow and a stroke limiting position for controlling flow.

FR1580524 discloses a ball valve, wherein the ball is coupled to the stem with an intermediate pin. Known solutions, although widely used, suffer considerable disadvantages.

First of all, the spherical element, especially during any maintenance interventions, sometimes separates from the stem because the coupling by interference is not always reliable, especially when the installation technician moves the stem with off-axis movements.

Moreover, the direct coupling between the stem and the spherical element, if it is not perfectly axially aligned due to the tolerances that are typical of machining processes, may cause a less than perfect closure of the valve, which over time may cause damage to the gaskets with consequent leakages of fluid.

Finally, the spherical elements used, which as mentioned are made of metallic materials such as brass or steel, are subjected to corrosion phenomena due to the ever increasing presence of aggressive agents within the controlled fluids.

The aim of the present invention is to solve the problems and obviate the drawbacks mentioned above, by providing a valve in which the coupling between the stem and the spherical element is extremely reliable.

Within this aim, an object of the invention is to provide a valve that can compensate any tolerances that are typical of machining processes.

Another object of the invention is to devise a valve that has a competitive manufacturing cost, so as to make its use advantageous also from the economic standpoint.

This aim and these and other objects that will become better apparent hereinafter are achieved by a valve according to the provisions of claim 1.

Further characteristics and advantages of the invention will become better apparent from the description of some preferred but not exclusive embodiments of a valve according to the invention, illustrated by way of non-limiting example in the accompanying drawings, wherein:
Figure 1 is an exploded perspective view of a first embodiment of the connection between the spherical element and the stem in a valve according to the invention;
Figure 2 is a side elevation view of the first embodiment of Figure 1;
Figure 3 is a sectional view, taken along the plane of arrangement designated by the line III-III of Figure 2;
Figure 4 is an exploded side elevation view of the first embodiment of Figure 1;
Figure 5 is a sectional view, taken along the plane of arrangement designated by the line V-V of Figure 4;
Figure 6 is a sectional view, taken along the plane of arrangement designated by the line VI-VI of Figure 4;
Figures 7 to 9 are perspective views of the assembly sequence of a second embodiment of the connection between the spherical element and the stem in a valve according to the invention;
Figure 10 is a side elevation view of the second embodiment shown in Figure 7;
Figure 11 is a sectional view, taken along the plane of arrangement designated by the line XI-XI of Figure 10;
Figure 12 is a sectional view, taken along the plane of arrangement designated by the plane XII-XII of Figure 10;

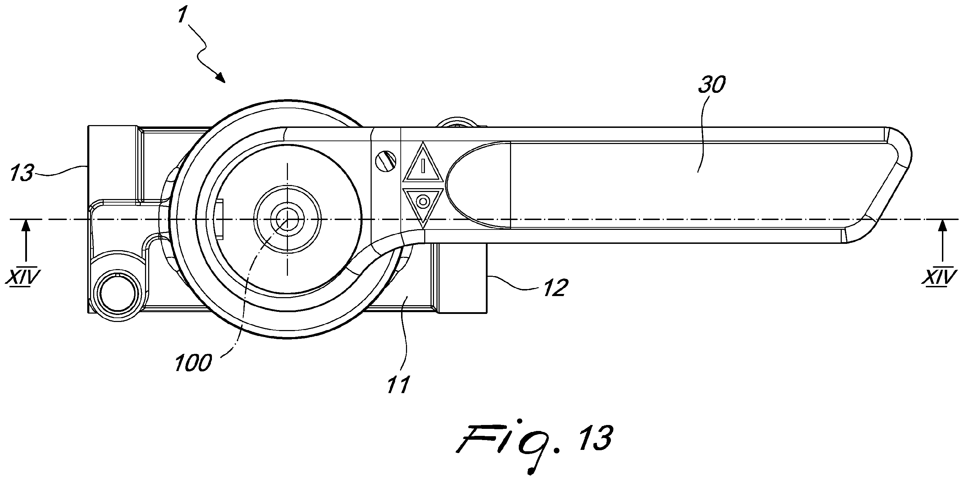

Figure 13 is a top plan view of a valve according to the invention;

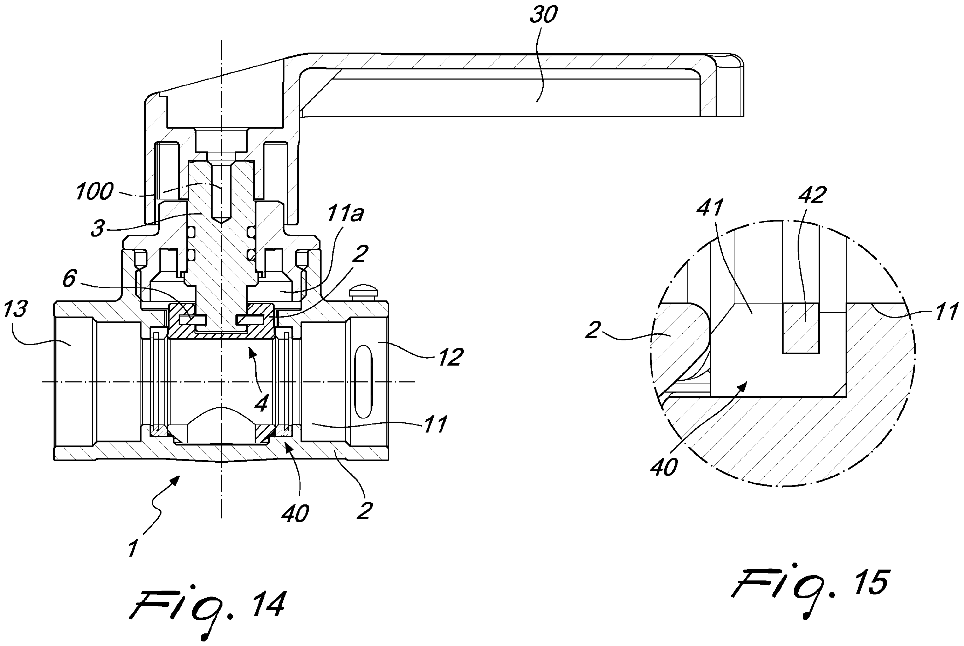

Figure 14 is a sectional view of the valve shown in Figure 13, taken along the plane of arrangement designated by the line XIV-XIV of Figure 13;
Figure 15 is an enlarged-scale view of the sectional view of Figure 14 at the sealing means interposed between the spherical element and the hollow valve body;
Figure 16 is an exploded perspective view of a further embodiment of the connection between the spherical element and the stem in a valve according to the invention;
Figure 17 is a perspective view of the embodiment of Figure 16.

In the examples of embodiment that follow, individual characteristics, given in relation to specific examples, may actually be interchanged with other different characteristics that exist in other examples of embodiment.

With reference to the figures, the present invention relates to a ball valve, generally designated by the reference numeral 1, for controlling the flow of fluids in ducts.

The ball valve 1 comprises a hollow valve body 11, which defines in an upward region an access mouth 11a and has at least two open tubular portions 12, 13 for detachable connection to a respective duct portion.

The ball valve 1 comprises a hollow spherical flow control element, designated by the reference numeral 2, which is accommodated, or more generally can be accommodated, in the hollow valve body 11.

The spherical element 2 has at least one flow passage 2a, typically an axial passage, and can be moved rotatably between at least one flow-allowing position and a flow control position.

The ball valve 1 comprises moreover a stem 3, which is adapted to be jointly connected to the spherical element 2 and can be actuated, manually (for example by means of a handle 30) or by way of motorized means, to allow the rotation of the spherical element 2 through a preset angle, from the flow-allowing position to the flow control position and vice versa.

The access mouth 11a can be crossed by the stem 3, to the lower end 3a of which the spherical element 2 is jointly connected by way of the interposition of connecting means, designated as a whole by the reference numeral 4.

According to the present invention, the connection means 4 comprise a receptacle 5 that is defined on the spherical element 2.

The receptacle 5 is intended to accommodate an intermediate body 6 and is adapted to lock the intermediate body 6 rotationally about the axis 100 of the access mouth 11a and in translation parallel to the axis 100 of the access mouth 11a.

The intermediate body 6 defines, moreover, a locking seat for the lower end of the stem 3.

According to the invention, the spherical element 2 is made of plastics.

Preferably, the intermediate body 6 is made of metallic material.

Advantageously, the receptacle 5 has a lateral access 5a for the insertion of the intermediate body 6.

Conveniently, the ball valve 1 comprises a so-called top entry valve.

In this type of valve, the access mouth 11a can be crossed by the spherical element 2 to which the lower portion of the stem 3 has been jointly connected beforehand by way of the interposition of connection means 4.

In greater detail, the lateral access 5a is adapted to allow the insertion of the intermediate body 6 in the receptacle 5 along an insertion direction 102 that is substantially perpendicular to the axis 100 of the access mouth 11a.

Preferably, the intermediate body 6 comprises a retention tab 6a, which cooperates with abutment means that are defined within the hollow valve body 11 of the valve 1 so as to define respectively, when the spherical element 2 is rotated, a stroke limit position for allowing flow and a stroke limit position for controlling flow of the spherical element 2 within the hollow valve body 11.

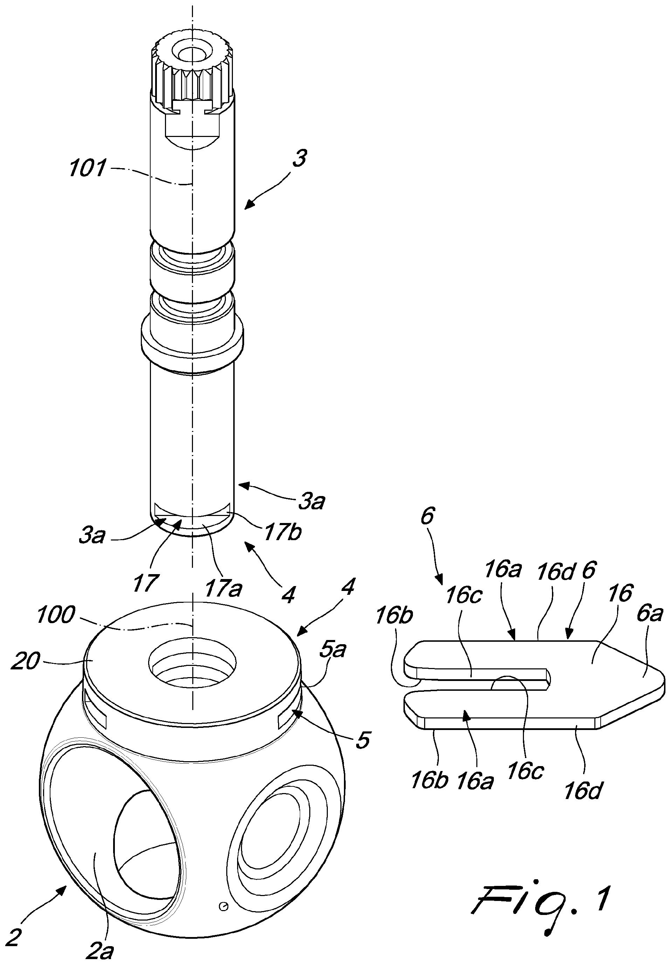

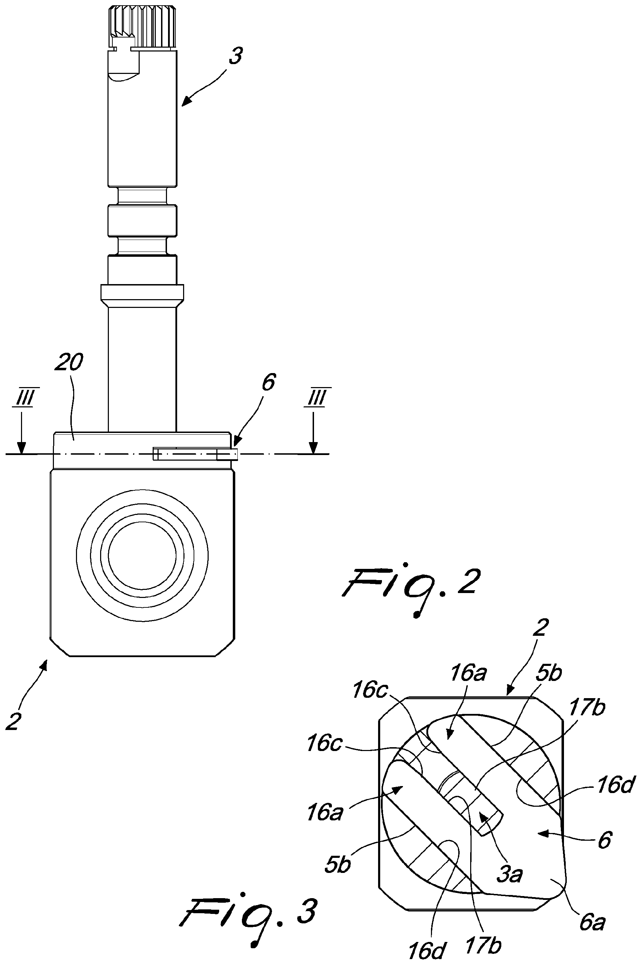

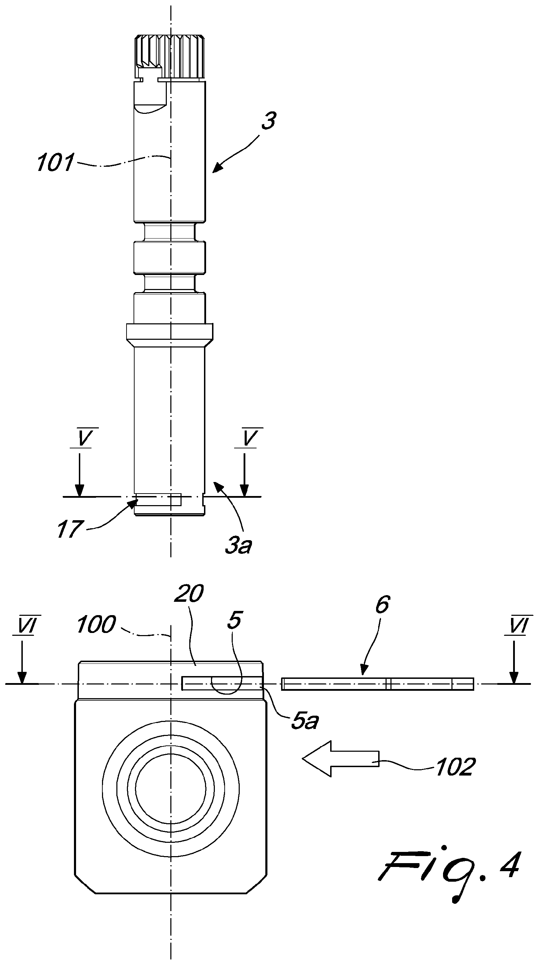

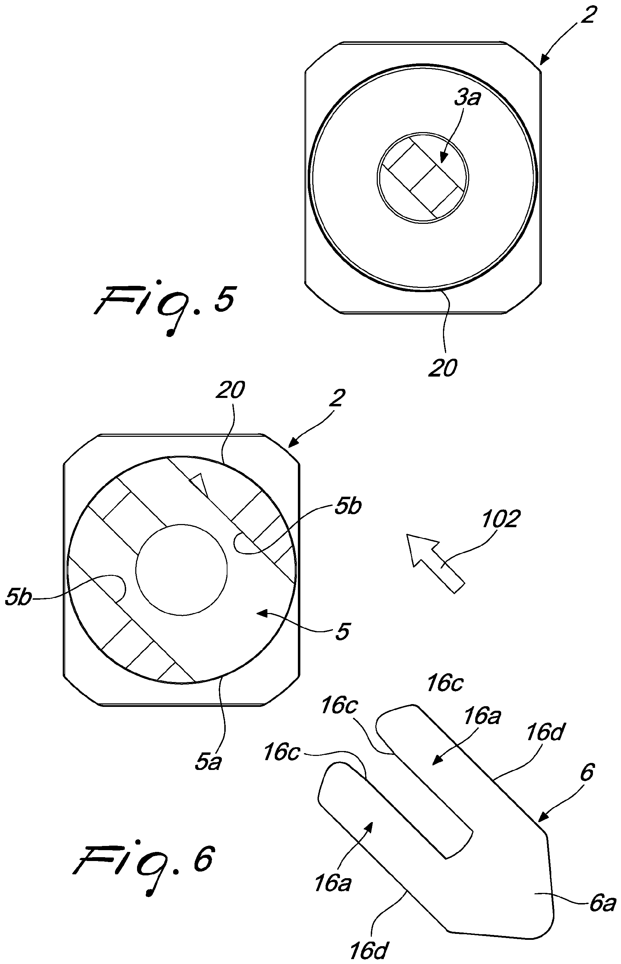

With reference to the first embodiment shown in Figures 1 to 6, the stem 3 has, substantially at its lower end 3a, at least one transverse recess 17 within which it is possible to accommodate a locking portion 16a defined on the intermediate body 6.

Preferably, as shown in the figures, the stem 3 has two transverse recesses 17 arranged on opposite sides with respect to the axis of extension 101 of the stem 3.

Conveniently, the or each transverse recess 17 defines at least one axial locking plane 17a that lies substantially at right angles to the axis of extension 101 of the stem 3 and is intended to face a first locking region 16b defined by the locking portion 16a.

In particular, the axial locking plane 17a is directed toward the upper end of the stem 3.

Preferably, the or each transverse recess 17 defines at least one abutment surface 17b, which is substantially parallel to the axis 101 of the stem 3.

The abutment surface 17b in particular is intended to face a second locking region, designated by 16c, defined by each locking portion 16a.

The receptacle 5 defines at least one lateral shoulder 5b that is intended to face a lateral transfer surface 16d defined on the intermediate body 6.

The lateral shoulder 5b is extended for a portion of the receptacle 5; said portion is extended enough to ensure the transfer of the rotation torque from the intermediate body 6 to the spherical element 2 without stressing excessively the inner surface of the receptacle 5.

The receptacle 5 is defined at a holding frame 20 that rises from the top of the spherical element 2; this allows to transfer the torque from the stem 3 to the spherical element 2 without compromising the characteristics of the valve 2 in terms of dimensions and flow-rate.

The lateral shoulder 5b is arranged laterally with respect to the axis 101 of the stem 3. Specifically, the lateral shoulder is arranged externally with respect to the outer lateral surface of the stem 3.

Conveniently, the intermediate body 6 defines two lateral transfer surfaces 16d, arranged on opposite sides with respect to the axis 101 of the stem 3.

Each one of the lateral transfer surfaces 16d, when the intermediate body 6 is inserted in the receptacle 5, faces a respective lateral shoulder 5b.

Advantageously, in order to lock stably the intermediate body 6 in the receptacle 5 there is interference between at least one portion, typically the end portion, of the locking region 16c and the receptacle 5.

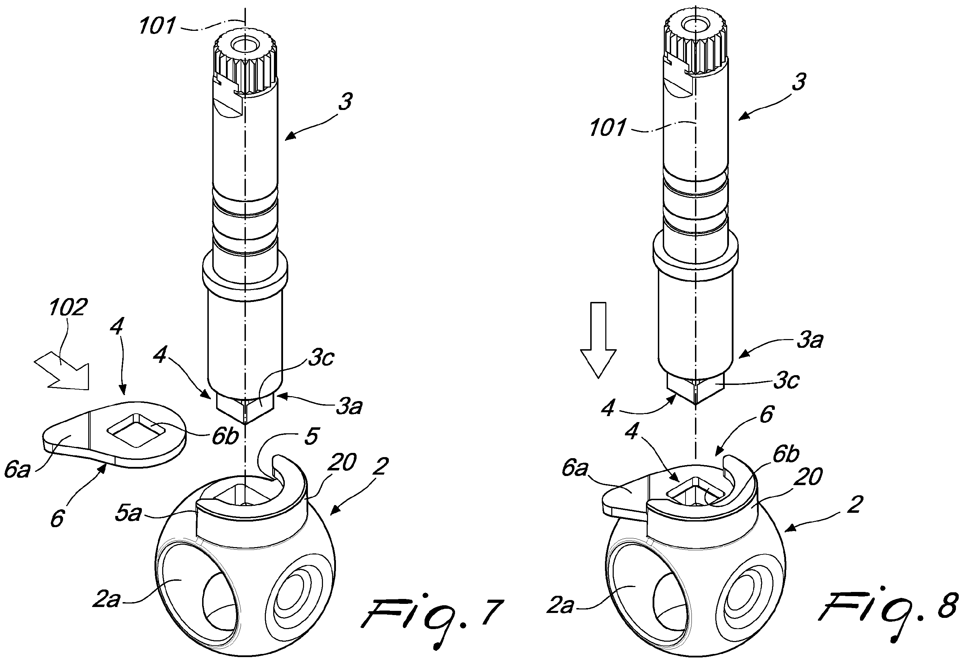

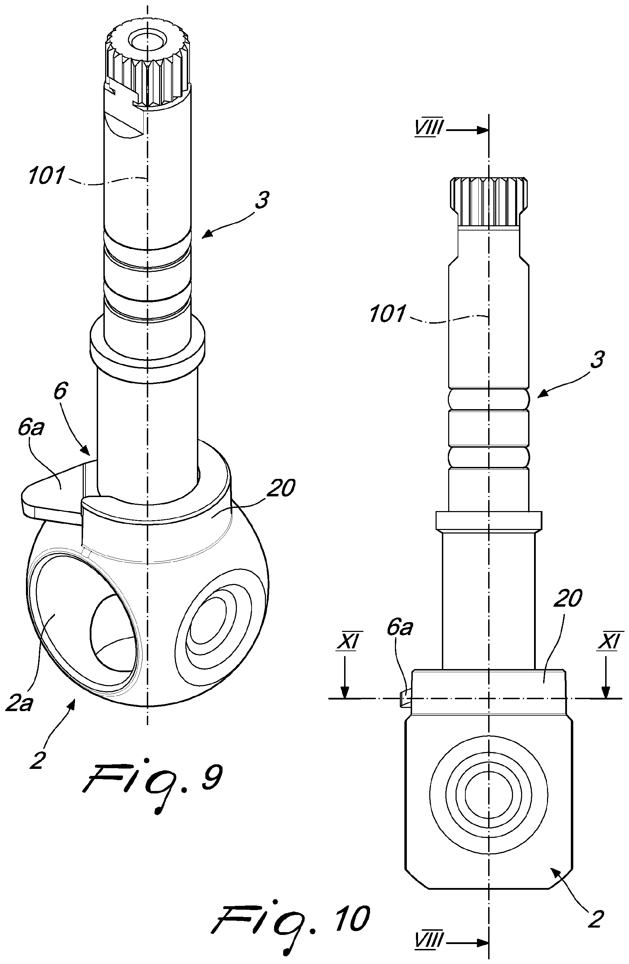

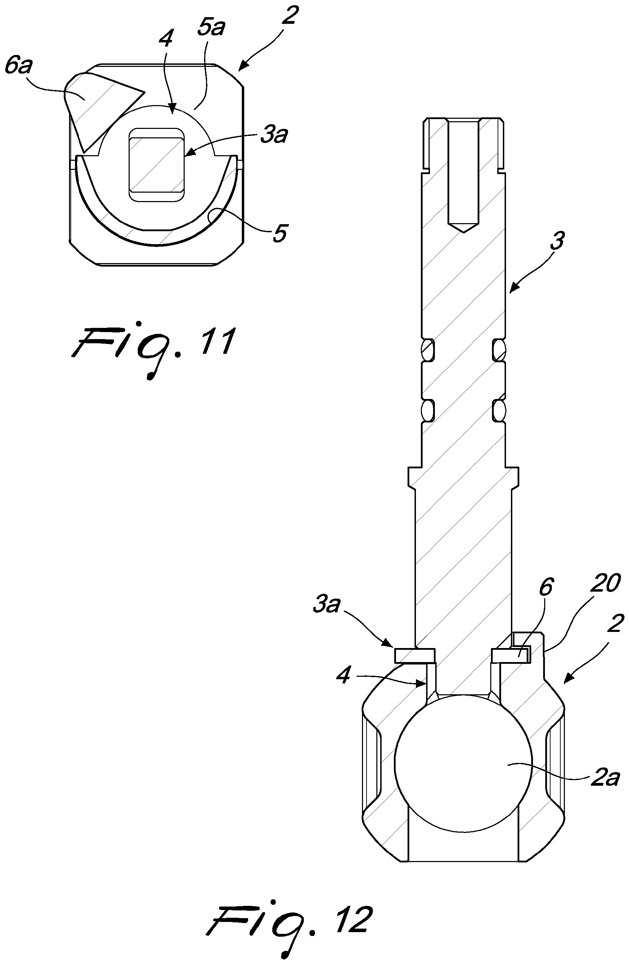

With reference to the embodiment shown in Figures 7 to 12, the intermediate body 6 defines a polygonal seat 6b.

In this case, the lower end 3a of the stem defines a locking tab 3c that can be locked by interference in the polygonal seat 6b.

Conveniently, the ball valve 1 provides sealing means arranged between the stem 3 and the access mouth 11a.

Preferably, there are sealing means 40 that act between the outer surface of the spherical element 2 and the inner surface of the hollow valve body 11.

Advantageously, the sealing means 40 comprise an annular body 41 made of rubber that accommodates a metallic insert 42.

This solution allows to obtain an optimum seal in the case of a spherical element 2 made of plastics and, at the same time, with an extremely reduced transverse volume of the sealing means 40.

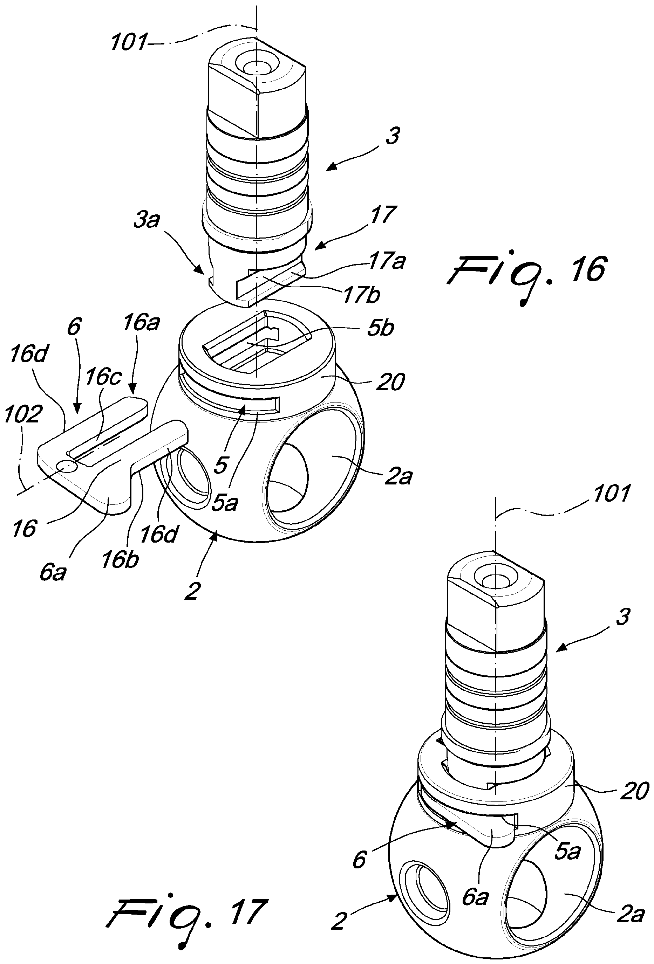

With reference to the embodiment shown in Figures 16 and 17, the locking tab 6a can be extended along a direction that is substantially at right angles to the insertion direction 102.

This constructive choice allows to facilitate the assembly of the various components and to better distribute the force transferred from the lateral transfer surface or surfaces 16d to the respective lateral shoulder 5b at the stroke limit positions.

The use of a valve 1 according to the invention is evident from what has been described above.

The fixing of the lower end 3a of the stem 3 to the spherical element 2 is extremely practical and effective.

With reference to the first embodiment shown in Figures 1 to 6, the lower end 3a of the stem 3 is inserted in the top of the spherical element 2 so that the recess or recesses 17 are arranged at the receptacle 5.

At this point the intermediate body 6 is inserted, through the lateral access 5a, in the receptacle 5, in practice locking the stem 3 with respect to the spherical element 2, both in rotation about its own axis 101 and in translation parallel thereto.

In particular, the provision of the locking of the stem 3 to the spherical element 2 by means of the interposition of the intermediate body 6 allows on the one hand to make the spherical element 2 of plastics and on the other hand to use, as in the embodiment shown in Figures 1 to 6, fixing means that are not of the interference type, avoiding the risks of detachment of the stem 3 from the spherical element 2.

Thanks to the presence of the locking portions 16a defined on the intermediate body 6, moreover, the transfer of the torque from the stem 3 to the intermediate body 6 and from the latter to the spherical element 2 is ensured.

Moreover, the provision of the spherical element by using plastics allows to recover any clearances or tolerances between the spherical element 2 and the stem 3, providing in practice a tilting spherical element 2.

All the characteristics of the invention indicated above as advantageous, convenient or the like, may also be omitted or be replaced by equivalents.

The invention thus conceived is susceptible of numerous modifications and variations, all of which are within the scope of the appended claims.

In practice it has been found that the invention has achieved the intended aim and objects in all of the embodiments.

In practice, the dimensions may be any according to requirements.

All the details may further be replaced with other technically equivalent elements.

Where technical features mentioned in any claim are followed by reference signs and/or abbreviations, those reference signs and/or abbreviations have been included for the sole purpose of increasing the intelligibility of the claims and accordingly such reference signs and/or abbreviations do not have any limiting effect on the interpretation of each element identified by way of example by such reference signs and/or abbreviations.

## Claims

1. A ball valve (1) for controlling the flow of fluids in ducts, comprising a hollow valve body (11) that defines in an upward region an access mouth (11a) and having at least two open tubular portions (12, 13) for detachable connection to a respective duct portion, a hollow spherical control element (2) accommodated in said hollow valve body (11), said spherical element (2) having at least one flow passage (2a) and being movable rotatably between at least one position for allowing flow and a flow control position, a stem (3) adapted to be jointly connected to said spherical element (2) and actuatable to allow the rotation of said spherical element (2) through a preset angle from said flow-allowing position to said control position and vice versa, said access mouth (11a) being crossable by said stem (3), said spherical element (2) being jointly connected to the lower end (3a) of said stem (3) by way of the interposition of connection means (4), said connection means (4) comprising a receptacle (5) that is defined on said spherical element (2), said receptacle (5) being intended to accommodate an intermediate body (6) and being adapted to lock said intermediate body (6) rotationally about the axis (100) of said access mouth (11a) and in translation parallel to the axis (100) of said access mouth (11a), said receptacle (5) defining at least one lateral shoulder (5b) that is intended to face a lateral transfer surface (16d) that is defined on said intermediate body (6) to allow the transfer of torque from the intermediate body (6) to the spherical element (2), **characterized in that** said spherical element (2) is made of plastics, said intermediate body (6) defines a locking seat for the lower end (3a) of said stem (3) to allow the transfer of torque from the stem (3) to the intermediate body (6), and said lateral shoulder (5a) is arranged externally with respect to the outer lateral surface of said stem (3).

2. The ball valve (1) according to claim 1, **characterized in that** said at least one lateral shoulder (5b) extends along at least one portion of said receptacle (5).

3. The ball valve (1) according to one or more of the preceding claims, **characterized in that** said receptacle (5) is defined at a holding frame (20) that stands on top of said spherical element (2).

4. The ball valve (1) according to one or more of the preceding claims, **characterized in that** said intermediate body (6) is made of metallic material.

5. The ball valve (1) according to one or more of the preceding claims, **characterized in that** said receptacle (5) has a lateral access (5a) for the insertion of said intermediate body (6).

6. The ball valve (1) according to claim 5, **characterized in that** said lateral access (5a) is adapted to allow the insertion of said intermediate body (6) in said receptacle (5) along an insertion direction (102) that is substantially perpendicular to the axis (100) of said access mouth (11a).

7. The ball valve (1) according to one or more of the preceding claims, **characterized in that** said intermediate body (6) comprises a retention tab (6a), which cooperates with abutment means that are defined within said hollow valve body (11) of said valve (1) in a manner that is adapted to define respectively, when said spherical element (2) is rotated, a stroke limit position for allowing flow and a stroke limit position for controlling flow of said spherical element (2) within said hollow valve body (11).

8. The ball valve (1) according to one or more of the preceding claims, **characterized in that** said stem (3) has, substantially at the lower end (3a), at least one transverse recess (17) within which it is possible to accommodate a locking portion (16a) defined on said intermediate body (6).

9. The ball valve (1) according to claim 8, **characterized in that** said at least one transverse recess (17) defines at least one axial locking plane (17a) that lies substantially at right angles to the axis of extension (101) of said stem (3) and is intended to face a first locking region (16c) defined by said locking portion (16a), said at least one axial locking plane (17a) being directed toward the upper end of said stem (3).

10. The ball valve (1) according to claim 9, **characterized in that** said at least one transverse recess (17) defines at least one abutment surface (17b) that is substantially parallel to the axis (101) of said stem (3) and is intended to face a second locking region (16c) defined by said locking portion (16a).

11. The ball valve (1) according to one or more of the preceding claims, **characterized in that** said intermediate body (6) defines two locking portions (16a) that are arranged on opposite sides with respect to the axis of extension (101) of said stem (3).

12. The ball valve (1) according to one or more of the preceding claims, **characterized in that** said intermediate body (6) is locked stably by interference in the respective receptacle (5).

13. The ball valve (1) according to one or more of the preceding claims, **characterized in that** it comprises sealing means (40) that act between the outer surface of said spherical element (2) and the inner surface of said hollow valve body (11), said sealing means (40) comprising an annular body (41) made of rubber that accommodates a metallic insert (42).

14. The ball valve (1) according to one or more of the preceding claims, **characterized in that** said locking seat defined on said intermediate body (6) comprises a polygonal seat (6b), the lower end (3a) of said stem defining a locking tab (3c) that can be locked by interference in said polygonal seat (6b).

15. The ball valve (1) according to one or more of the preceding claims, **characterized in that** it comprises sealing means between said stem (3) and said access mouth.

## Patentansprüche

1. Ein Kugelventil (1) zur Steuerung des Durchflusses von Fluiden in Leitungen, das einen hohlen Ventilkörper (11) umfasst, der in einem oberen Bereich eine Zugangsöffnung (11a) bestimmt und mindestens zwei offene röhrenförmige Abschnitte (12, 13) für die lösbare Verbindung mit einem entsprechenden Leitungsabschnitt hat, wobei ein hohles, kugelförmiges Steuerelement (2) in dem hohlen Ventilkörper (11) untergebracht ist, wobei das kugelförmige Element (2) mindestens eine Durchflussleitung (2a) hat und drehbar beweglich ist zwischen mindestens einer Position zum Ermöglichen des Durchflusses und einer Durchflusssteuerposition, wobei ein Schaft (3) ausgebildet ist, um gemeinsam mit dem kugelförmigen Element (2) verbunden zu werden, und betätigt werden kann, um die Drehung des kugelförmigen Elements (2) in einem vordefinierten Winkel aus der den Durchfluss ermöglichenden Position in die Steuerposition zu ermöglichen und umgekehrt, wobei die Zugangsöffnung (11a) von dem Schaft (3) durchquert werden kann, wobei das kugelförmige Element (2) gemeinsam durch die Zwischenschaltung von Verbindungsmitteln (4) mit dem unteren Ende (3a) des Schafts (3) verbunden ist, wobei die Verbindungsmittel (4) eine Aufnahmevorrichtung (5) umfassen, die an dem kugelförmigen Element (2) bestimmt ist, wobei die Aufnahmevorrichtung (5) dazu dient, einen intermediären Körper (6) aufzunehmen, und ausgebildet ist, um den intermediären Körper (6) drehend um die Achse (100) der Zugangsöffnung (11a) und in Translation parallel zur Achse (100) der Zugangsöffnung (11a) zu blockieren, wobei die Aufnahmevorrichtung (5) mindestens eine seitliche Schulter (5b) bestimmt, die dazu bestimmt ist, einer seitlichen Transferoberfläche (16d) zugewandt zu sein, die an dem intermediären Körper (6) bestimmt ist, um die Übertragung eines Drehmoments vom intermediären Körper (6) auf das kugelförmige Element (2) zu ermöglichen, **dadurch gekennzeichnet, dass** das kugelförmige Element (2) aus Kunststoff besteht, der intermediäre Körper (6) einen Klemmsitz für das untere Ende (3a) des Schafts (3) bestimmt, um die Übertragung des Drehmoments vom Schaft (3) auf den intermediären Körper (6) zu ermöglichen, und die seitliche Schulter (5a) extern im Verhältnis zur äußeren Seitenfläche des Schafts (3) angeordnet ist.

2. Das Kugelventil (1) gemäß Anspruch 1, **dadurch gekennzeichnet, dass** die mindestens eine seitliche Schulter (5b) sich entlang mindestens einem Abschnitt der Aufnahmevorrichtung (5) erstreckt.

3. Das Kugelventil (1) gemäß einem oder mehreren der obigen Ansprüche, **dadurch gekennzeichnet, dass** die Aufnahmevorrichtung (5) an einem Halterahmen (20) bestimmt ist, der oben auf dem kugelförmigen Element (2) steht.

4. Das Kugelventil (1) gemäß einem oder mehreren der obigen Ansprüche, **dadurch gekennzeichnet, dass** der intermediäre Körper (6) aus Metallmaterial besteht.

5. Das Kugelventil (1) gemäß einem oder mehreren der obigen Ansprüche, **dadurch gekennzeichnet, dass** die Aufnahmevorrichtung (5) einen seitlichen Zugang (5a) zum Einfügen des intermediären Körpers (6) hat.

6. Das Kugelventil (1) gemäß Anspruch 5, **dadurch gekennzeichnet, dass** der seitliche Zugang (5a) ausgebildet ist, um das Einfügen des intermediären Körpers (6) in die Aufnahmevorrichtung (5) entlang einer Einführrichtung (102) zu ermöglichen, die im Wesentlichen senkrecht zur Achse (100) der Zugangsöffnung (11a) ist.

7. Das Kugelventil (1) gemäß einem oder mehreren der obigen Ansprüche, **dadurch gekennzeichnet, dass** der intermediäre Körper (6) eine Haltelasche (6a) umfasst, die mit Widerlagermitteln zusammenwirkt, welche in dem hohlen Ventilkörper (11) des Ventils (1) bestimmt sind, derart, dass sie, wenn das kugelförmige Element (2) gedreht wird, eine Hubbegrenzungsposition zum Ermöglichen des Durchflusses beziehungsweise eine Hubbegrenzungsposition zum Steuern des Durchflusses des kugelförmigen Elements (2) in dem hohlen Ventilkörper (11) bestimmen.

8. Das Kugelventil (1) gemäß einem oder mehreren der obigen Ansprüche, **dadurch gekennzeichnet, dass** der Schaft (3), im Wesentlichen am unteren Ende (3a), mindestens eine transversale Einkerbung (17) hat, in die ein Blockierabschnitt (16a) aufgenommen werden kann, der an dem intermediären Körper (6) bestimmt ist.

9. Das Kugelventil (1) gemäß Anspruch 8, **dadurch gekennzeichnet, dass** die mindestens eine transversale Einkerbung (17) mindestens eine axiale Blockierebene (17a) bestimmt, die im Wesentlichen in rechten Winkeln zur Erstreckungsachse (101) des Schafts (3) liegt und dazu bestimmt ist, einem ersten Blockierbereich (16c) zugewandt zu sein, der von dem Blockierabschnitt (16a) bestimmt wird, wobei die mindestens eine axiale Blockierebene (17a) zum oberen Ende des Schafts (3) hin gerichtet ist.

10. Das Kugelventil (1) gemäß Anspruch 9, **dadurch gekennzeichnet, dass** die mindestens eine transversale Einkerbung (17) mindestens eine Widerlageroberfläche (17b) bestimmt, die im Wesentlichen parallel zur Achse (101) des Schafts (3) und dazu bestimmt ist, einem zweiten Blockierbereich (16c), der von dem Blockierabschnitt (16a) bestimmt wird, zugewandt zu sein.

11. Das Kugelventil (1) gemäß einem oder mehreren der obigen Ansprüche, **dadurch gekennzeichnet, dass** der intermediäre Körper (6) zwei Blockierabschnitte (16a) bestimmt, die auf gegenüberliegenden Seiten mit Bezug auf die Erstreckungsachse (101) des Schafts (3) angeordnet sind.

12. Das Kugelventil (1) gemäß einem oder mehreren der obigen Ansprüche, **dadurch gekennzeichnet, dass** der intermediäre Körper (6) durch Interferenz fest in der jeweiligen Aufnahmevorrichtung (5) blockiert ist.

13. Das Kugelventil (1) gemäß einem oder mehreren der obigen Ansprüche, **dadurch gekennzeichnet, dass** es Abdichtmittel (40) umfasst, die zwischen der Außenfläche des kugelförmigen Elements (2) und der Innenfläche des hohlen Ventilkörpers (11) wirken, wobei die Abdichtmittel (40) einen ringförmigen Körper (41) aus Gummi umfassen, der einen Metalleinsatz (42) enthält.

14. Das Kugelventil (1) gemäß einem oder mehreren der obigen Ansprüche, **dadurch gekennzeichnet, dass** der Blockiersitz, der an dem intermediären Körper (6) bestimmt ist, einen vieleckigen Sitz (6b) umfasst, wobei das untere Ende (3a) des Schafts eine Verriegelungslasche (3c) bestimmt, die durch Interferenz in dem vieleckigen Sitz (6b) blockiert werden kann.

15. Das Kugelventil (1) gemäß einem oder mehreren der obigen Ansprüche, **dadurch gekennzeichnet, dass** es Abdichtmittel zwischen dem Schaft (3) und der Zugangsöffnung umfasst.

## Revendications

1. Vanne sphérique (1) destinée à réguler l'écoulement de fluides dans des conduits, la vanne comprenant un corps de vanne creux (11) qui définit une bouche d'accès (11a) dans une zone supérieure et qui présente au moins deux parties tubulaires ouvertes (12, 13) prévues pour un raccordement amovible à une partie de conduit respective, un élément de régulation sphérique creux (2) logé dans ledit corps de vanne creux (11), ledit élément sphérique (2) présentant au moins un passage d'écoulement (2a) et étant mobile en rotation entre au moins une position permettant l'écoulement et une position de régulation de l'écoulement, une tige (3) qui est adaptée à être raccordée solidairement audit élément sphérique (2) et actionnable de sorte à permettre la rotation dudit élément sphérique (2) selon un angle prédéterminé entre ladite position permettant l'écoulement et ladite position de régulation et vice versa, ladite bouche d'accès (11a) pouvant être traversée par ladite tige (3), ledit élément sphérique (2) étant raccordé solidairement à l'extrémité inférieure (3a) de ladite tige (3) par interposition de moyens de raccordement (4), lesdits moyens de raccordement (4) comprenant un récipient (5) qui est défini sur ledit élément sphérique (2), ledit récipient (5) étant prévu pour loger un corps intermédiaire (6) et adapté à verrouiller ledit corps intermédiaire (6) en rotation autour de l'axe (100) de ladite bouche d'accès (11a) et en translation parallèlement à l'axe (100) de ladite bouche d'accès (11a), ledit récipient (5) définissant au moins une épaule latérale (5b) destinée à faire face à une surface de transfert latérale (16d) définie sur ledit corps intermédiaire (6) pour permettre le transfert de couple du corps intermédiaire (6) à l'élément sphérique (2), vanne sphérique, qui est **caractérisée en ce que** ledit élément sphérique (2) est en matière plastique, ledit corps intermédiaire (6) définit un siège de verrouillage pour l'extrémité inférieure (3a) de ladite tige (3), afin de permettre le transfert de couple de la tige (3) au corps intermédiaire (6), et ladite épaule latérale (5a) est disposée à l'extérieur par rapport à la surface latérale externe de ladite tige (3).

2. Vanne sphérique (1) suivant la revendication 1, **caractérisée en ce que** ladite au moins une épaule latérale (5b) s'étend le long d'au moins une partie dudit récipient.

3. Vanne sphérique (1) suivant une ou plusieurs des revendications précédentes, **caractérisée en ce que** ledit récipient (5) est défini au niveau d'un cadre de maintien (20) qui se situe sur le dessus dudit élément sphérique (2).

4. Vanne sphérique (1) suivant une ou plusieurs des revendications précédentes, **caractérisée en ce que** ledit corps intermédiaire (6) est réalisé dans un matériau métallique.

5. Vanne sphérique (1) suivant une ou plusieurs des revendications précédentes, **caractérisée en ce que** ledit récipient (5) présente un accès latéral (5a) pour l'insertion dudit corps intermédiaire (6).

6. Vanne sphérique (1) suivant la revendication 5, **caractérisée en ce que** ledit accès latéral (5a) est adapté à permettre l'insertion dudit corps intermédiaire (6) dans ledit récipient (5) le long d'une direction d'insertion (102) qui est essentiellement perpendiculaire à l'axe (100) de ladite bouche d'accès (11a).

7. Vanne sphérique (1) suivant une ou plusieurs des revendications précédentes, **caractérisée en ce que** ledit corps intermédiaire (6) comprend une languette de retenue (6a) qui coopère avec des moyens de butée définis à l'intérieur du corps de vanne creux (11) de ladite vanne (1) de sorte à définir respectivement une position de limite de course, lorsque ledit élément sphérique est en rotation, pour permettre l'écoulement et une position de limite de course, pour réguler l'écoulement dudit élément sphérique (2) à l'intérieur dudit corps de vanne creux (11).

8. Vanne sphérique (1) suivant une ou plusieurs des revendications précédentes, **caractérisée en ce que** ladite tige (3) présente, essentiellement à l'extrémité inférieure (3a) au moins un évidement transversal (17) à l'intérieur duquel peut être logée une partie de verrouillage (16a) définie sur ledit corps intermédiaire (6).

9. Vanne sphérique (1) suivant la revendication 8, **caractérisée en ce que** ledit au moins un évidement transversal (17) définit au moins un plan de verrouillage (17a) qui se situe perpendiculairement à l'axe d'extension (101) de ladite tige (3) et qui est destiné faire face à une première zone de verrouillage (16c) définie par ladite partie de verrouillage (16a), ledit au moins un plan de verrouillage axial (17a) étant orienté vers l'extrémité supérieure de ladite tige (3).

10. Vanne sphérique (1) suivant la revendication 9, **caractérisée en ce que** ledit au moins un évidement transversal (17) définit au moins une surface de butée (17b) qui est essentiellement parallèle à l'axe (101) de ladite tige (3) et destinée à faire face à une seconde zone de verrouillage (16c) définie par ladite partie de verrouillage (16a).

11. Vanne sphérique (1) suivant une ou plusieurs des revendications précédentes, **caractérisée en ce que** ledit corps intermédiaire (6) définit deux parties de verrouillage (16a) qui sont disposées sur des côtés opposés par rapport à l'axe d'extension (101) de ladite tige (3).

12. Vanne sphérique (1) suivant une ou plusieurs des revendications précédentes, **caractérisée en ce que** ledit corps intermédiaire (6) est verrouillé de façon stable par ajustement dans le récipient respectif (5).

13. Vanne sphérique (1) suivant une ou plusieurs des revendications précédentes, **caractérisée en ce qu'**elle comprend des moyens d'étanchéité (40) qui agissent entre la surface externe dudit élément sphérique (2) et la surface interne dudit corps de vanne creux (11), lesdits moyens d'étanchéité (40) comprenant un corps annulaire (41) réalisé en caoutchouc, corps annulaire, dans lequel est logé un insert métallique (42).

14. Vanne sphérique (1) suivant une ou plusieurs des revendications précédentes, **caractérisée en ce que** ledit siège de verrouillage défini sur ledit corps intermédiaire (6) comprend un siège polygonal (6b), l'extrémité inférieure (3a) de ladite tige définissant une languette de verrouillage (3c) qui peut être verrouillée par ajustement dans ledit siège polygonal (6b).

15. Vanne sphérique (1) suivant une ou plusieurs des revendications précédentes, **caractérisée en ce qu'**elle comprend des moyens d'étanchéité entre ladite tige (3) et ladite bouche d'accès.
